# EUROPEAN PATENT APPLICATION

(11) **EP 0 848 407 A2**
(43) Date of publication of application: **17.06.1998**
(21) Application number: 97121161.0
(22) Date of filing: 02.12.1997
(51) Int. Cl.: H01J 9/24, H01J 61/30

(54) **Integrally molded flat compact fluorescent lamp**

(30) Priority: 04.12.1996 US 759382
(71) Applicant: MATSUSHITA ELECTRIC WORKS, LTD., Kadoma-shi Osaka 571 (JP)
(72) Inventor: Anandan, Munisamy, Fishkill, New York 12524 (US); Maya, Jakob, Brookline,MA 02146 (US)
(74) Representative: Strehl Schübel-Hopf & Partner

(57) **Abstract**

An integrally moulded flat fluorescent lamp comprises a channelled member 11 of vitreous glass with a convoluted channel 14 fabricated by employing a combination of vacuum-assisted sag moulding, press-moulding and blow-moulding techniques. While the channelled member 11 is molten, a planar member 13 is fused to it by pressing the members together at 15 to form a closed lamp envelope. The inside of the resulting envelope is coated with a phosphor layer and preferably the external surface of the envelope is coated with a reflective layer. A pair of electron-emissive electrodes are fused to openings 12 in the envelope. The electrodes are sealed through glass flares at the two openings in the envelope. The lamp envelope is evacuated and filled with a rare gas and mercury to a suitable pressure and sealed off to form a lamp.

## Description

### TECHNICAL FIELD

The present invention relates to a fluorescent lamp and particularly to flat compact fluorescent lamp which utilizes a spiral and/or serpentine discharge path, and a method of fabricating the lamp.

### BACKGROUND ART

Modern compact fluorescent lamps employ bending of circular glass tubes into the basic U-shape and multiples of U-shapes to arrive at the compactness to maintain the required arc length to achieve reasonable efficiency. An alternative method of deriving compactness is by the use of flat fluorescent lamps. Flat fluorescent lamps are area lamps (two-dimensional) that can be designed to yield light output in preferred directions by employing internal reflectors. In the literature there are various geometries of flat fluorescent lamps containing different shapes of arcs such as 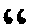 spiral, 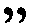 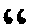 serpentine 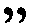 and combinations of these. All the flat fluorescent lamps basically employ two glass members, or one ceramic member and another glass member. These members are conventionally coated with a phosphor layer, a reflective layer and a protective layer prior to sealing the two discrete members. In several of the lamps, either one member is formed, molded or machined and the other member is planar. In some lamps both members are formed, molded or machined.

Flat compact fluorescent lamps of the prior art had two discrete members which were individually subjected to coating and processing. A sealing operation utilizing a frit was necessary to integrate the two members into one. A prior spiral channel flat compact fluorescent lamp has a molded glass or ceramic member containing the reflective and phosphor coated spiral channel and two protrusions enclosing two holes. Two electron-emissive electrodes mounted on wafers or flares, one of which contains an exhaust tubulation, and both integral with leads, are sealed to the protrusions through frit rings. The molded member is sealed at the top to a circular plate through a frit ring. Before this sealing is done, all the coatings, namely protective, reflective, and phosphor, are all disposed both on the circular plate and the molded member. The disadvantage in this prior art is the laborious step of frit application and sealing, in addition to the circular plate preparation. In mass manufacturing these extra operations increase the cost. Further, the weight of the molded glass, if press molded, is high. For a 5-1/4" diameter molded member with four spiral channels, the press-molded member weighed about 200 grams. The same member with sag molding technique weighed about 115 grams. The total weight of the lamp, which includes the weight of the circular plate, frit and the electrode assembly is 250 grams for press-molded member and about 165 grams for the sag-molded member. For commercial marketing, these weights are not attractive when compared to the weight of the existing compact fluorescent lamps of less than 100 grams.

Followings are among such prior art flat compact fluorescent lamps.

U.S. Patent No. 2,405,518 discloses a spiral channel flat fluorescent lamp which is composed of a metal housing with a spiral channel and a transparent cover plate sealed to the metal housing. The two members were independently coated, processed and had to be sealed.

U.S. Patent No. 2,501,376 discloses a circular flat fluorescent lamp comprising two discrete glass members which forms a spiral channel extending from the periphery to the center and returning to the periphery. The two members were sealed after independent coating and processing.

U.S. Patent No. 2,555,749 discloses a flat fluorescent lamp having two molded members that were independently coat-processed prior to a separate sealing operation.

U.S. Patent No. 3,226,590 discloses a panel lamp having two complementary vacuum-molded glass members that were coated and processed. A fusion seal operation resulted in a single envelope of the lamp.

U.S. Patent No. 3,646,383 discloses a fluorescent panel lamp which measures 12 square inches with serpentine channels. The lamp is composed of two molded members with eight grooved sections. These sections are coated, processed with phosphor and other coatings, and then sealed together to form a single unit by heating the edges above the strain point and applying pressure.

U.S. Patent No. 3,258,630 discloses an electric discharge lamp having a serpentine channel formed between a press-molded member and a planar member. A separate sealing of the individually coat-processed members is necessary to obtain the lamp.

U.S. Patent No. 5,220,249 discloses a flat fluorescent lamp for liquid crystal backlighting which is composed of a molded member and a planar plate that are independently coat-processed. The lamp had parallel serpentine channels. The molded member and the planar plate are subject to a separate sealing operation after they are coated and processed.

Hicks et al. discloses a 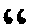 wafer light 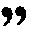 (13th DASC.AIAA/IEEE Digital Avionics System Conference pages. 630-635, Oct. 30 - Nov. 3, 1994) for backlighting a liquid crystal display. The wafer light is composed of a channel plate with serpentine grooves and a flat plate. These members were sealed after coating and processing to yield a single unit lamp.

### DISCLOSURE OF THE INVENTION

The present invention does not require frit sealing of two members. Instead, the members are molded as integral units, fused together while molten, and the coatings are then applied and processed. The lamp of the present invention includes a vitreous glass convoluted channeled member and a vitreous glass planar member. The glass forming the walls of the channeled member is fused with the glass of said planar member. With such fusion, the two members form a lamp envelope with a closed internal convoluted channel disposed therein. An electron-emissive electrode is centrally located in the lamp envelope which further includes at least one peripheral electrode. Both of the electrodes are flame-sealed to the channeled member. A coating of a conventional light emissive phosphor is disposed on the inside of the channel walls and a conventional light reflective layer is disposed on the external surfaces of said channel member. In an alternative arrangement, the light reflective layer can be deposited on the inside of the channel to cover the planar member so that light is emitted through the front side only of the lamp envelope. The lamp of the present invention has a low weight compared to prior art lamps and does not employ laborious frit sealing operation which slows manufacturing rate and increases production costs

The integrally molded glass envelope has a convoluted channeled member that is obtained by vacuum assisted sag molding of glass. A planar glass member is fused to the walls of the channeled member. While the channeled member is still hot during vacuum assisted sag molding operation, the planar member is sealed to the channel walls by a hot press operation in which the glass of the planar member fuses into the glass of the channel walls. Two tubular holes are formed in the closed lamp envelope for sealing two small tubes to which electrodes are sealed, after coating the inner-surfaces of the closed lamp envelope with phosphor.

Several methods of depositing the phosphor in the envelope are available. In one method, prior to sealing the electrodes, a phosphor slurry is poured into one of the holes while holding the envelope slanted. Thus, a column of phosphor is trapped and is moved through the channel by suitably pressurizing nitrogen gas behind the trapped column of phosphor. The slurry is drained through the other hole. Once the phosphor is drained out, the integrally molded glass envelope is held horizontal and spun about the central hole while simultaneously injecting nitrogen through the center hole until the phosphor is uniformly dried. In another method, the slurry of phosphor is sucked out slowly from the lamp with a liquid suction pump. The technique coats the walls uniformly. In either technique, drying the phosphor layer uniformly can be accomplished by pushing nitrogen gas through the opposite hole. Subsequently, the phosphor is sintered, and then two electron-emissive electrodes are sealed by flame sealing, and the lamp envelope is processed and aged. A reflective coating can be externally applied on the outer surfaces of the channeled member.

While for many applications it is preferred to coat the reflective coating on the exterior of the channeled member, sometimes it is advantageous to apply the reflective coating to the interior of the envelope. In such cases, the reflective coating is placed beneath the phosphor coating by injecting a quantity of a slurry of conventional reflective material into the hole and then allowing it to flow through the channel at a predetermined depth whereafter it can be dried by conventional methods.

In addition to slurry methods, powders of the reflective material and/or the phosphor can be coated using electrostatic techniques, as is conventional in the lamp making industry. With such techniques, an electrostatically charged powder is driven into the area where the coating is desired using an inert gas such as nitrogen. Acceleration of the adhesion of the particles to the channeled member is provided by disposing an electrically-grounded plate outside the glass envelope. Changing the width of the grounded plate can change the area of the coating on the interior surface. For example, a coating of the phosphor at an subtended angle of 10°, i.e., over an angular range of 10° on the inside of the channeled member can be accomplished by placing a narrow grounded plate adjacent the bottom of the channeled member while the coating at subtended angles of 180° or more can be accomplished by encircling outside of the channeled member as a mask. The subtended angle is determined to be an angle about a center axis of discharge path with respect to a region or width over which the layer is formed in the cross-section of the lamp. The electrostatically-charged particles of either dry reflective material or phosphor are blown through one of the openings and removed through the other.

### BRIEF DESCRIPTION OF THE DRAWINGS

Fig. 1 is a cross-sectional view of an integrally molded flat compact fluorescent lamp in accordance with a first embodiment of the present invention;
Fig. 2 is an isometric view of a modification of the above lamp shown with electrodes and a reflective layer;
Fig. 3 is a plan view of an integrally molded flat compact fluorescent lamp with double parallel spiral channels in accordance with a second embodiment of the present invention;
Fig. 4 is another plan view of an integrally molded flat compact fluorescent lamp with double serpentine channels in accordance with a third embodiment of the present invention; and
Fig. 5 is a cross-section of an integrally molded flat compact fluorescent lamp in accordance with a fourth embodiment of the present invention.

### MODES FOR CARRYING OUT THE INVENTION

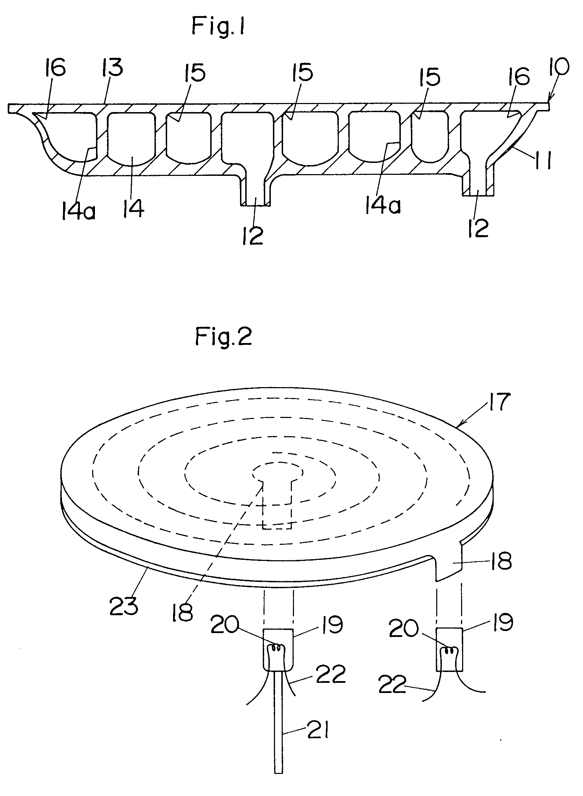

Fig. 1 illustrates an integrally molded flat compact fluorescent lamp in accordance with a first embodiment of the present invention. The lamp comprises a glass envelope **10** composed of a molded channeled member **11** with a spiral channel **14**, and a planar member **13**. The channel **14** is formed by the walls **14a**. The envelope contains integral tubes **12** formed in the channeled member **11** to which the electrode assemblies are flame-sealed later. The planar member **13** is fused at fused sections **15** and **16** of the walls **14a**. Such fusing is accomplished by press sealing the channeled member **11** while the channeled member is still molten during vacuum-assisted sag molding. The sections **15** and **16** are vacuum tight and free from any inter-channel discharge leaks when the lamp is made since the glass of the walls **14a** is fused to the planar member **13**. Such fusion between the members eliminates the laborious formation of the frit seals as was done previously with lamps of the present type. The weight of the envelope for 5-1/4 inches diameter lamp is 70 grams. Flame-sealing the electrode assemblies to the tubes **12** is a fast operation that is convenient for mass manufacturing. Prior to the sealing of the electrode assemblies, the envelope is processed to provide a phosphor layer on the interior surface of the envelope in a manner as discussed hereinbefore. The phosphor density of the phosphor is made smaller on the planar member than on the channeled member. Then, the envelope is evacuated and filled with a rare gas and mercury to a suitable pressure and sealed off to form the lamp.

Fig. 2 illustrates a modification of the above lamp with an external reflective layer **23**. The lamp comprises a like glass envelope **17** with tubes **18** and the externally-coated reflective layer **23**. The inner surfaces of the spiral channel are coated with the like phosphor layer, as discussed hereinbefore.
Two electrode assemblies are used. A central electrode assembly has an exhaust tubulation **21**, leads **22**, and electron-emissive electrodes **20** disposed in a glass tube **19**. An outer electrode assembly has all of the components of the central one except the exhaust tubulation. These assemblies are sealed to the tubes **18** of the integrally molded member in a conventional flame-sealing operation. A completed lamp with a diameter of 5-1/4" weighs 80 grams.

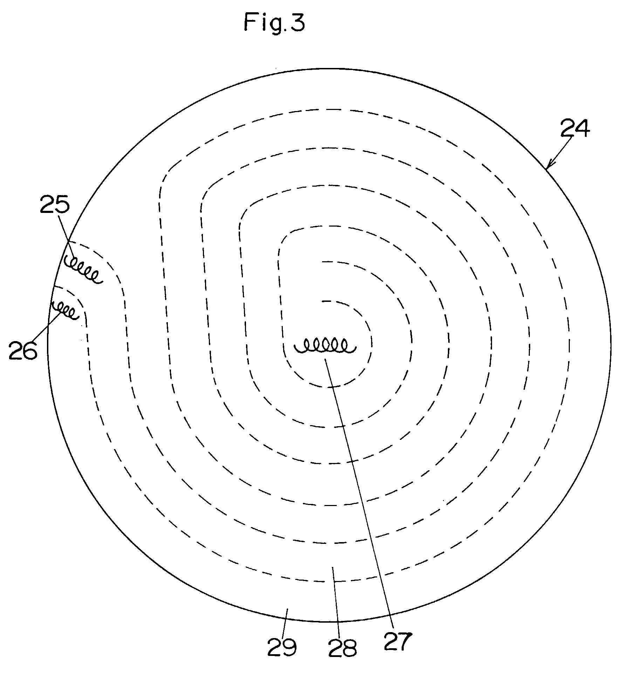

Fig. 3 illustrates an integrally molded flat compact fluorescent lamp in accordance with a second embodiment of the present invention. The lamp comprises an integrally molded glass envelope **24** with double spiral channels **28** and **29** running parallel all the way from the outer two electrodes **25** and **26** to a center common electrode **27**. The envelope **24** is composed of a channeled member integrally molded to a planar member as in the first embodiment. With the provision of the parallel spiral channels, the lamp voltage can be made low, yet providing an elongated total discharge path. The other configuration is the same as in the lamp of FIG. 2. Coating of the phosphor is also made after integrating the channeled member and the planar member into the envelope and before mounting the electrode assemblies, as discussed herein.

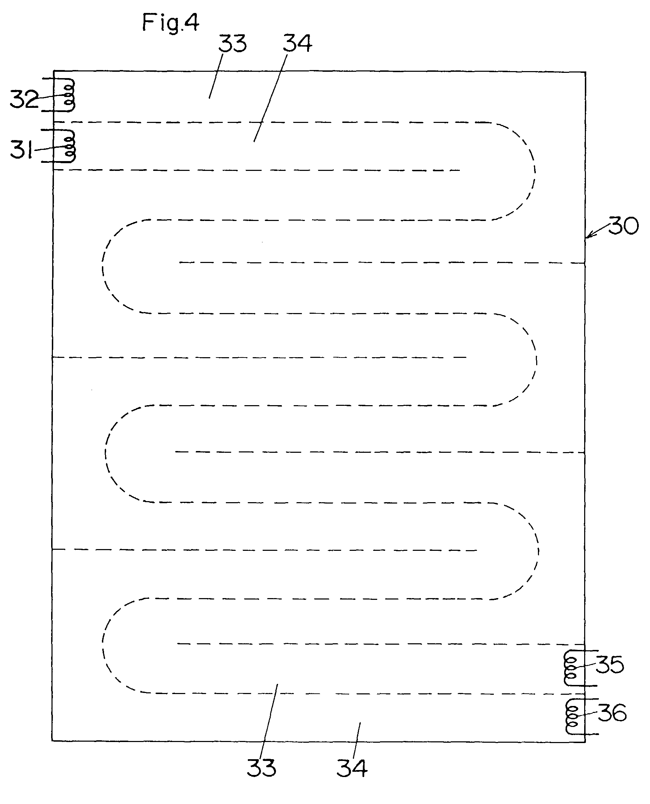

Fig. 4 illustrates a flat compact fluorescent lamp in accordance with a third embodiment of the present invention. The lamp comprises an integrally molded glass envelope **30** with two parallel serpentine channels **33** and **34** extending from two top electrodes **31** and **32** to two bottom electrodes **35** and **36**. The other configuration is the same as in the lamp of FIG. 2. Coating the phosphor is also accomplished as discussed herein.

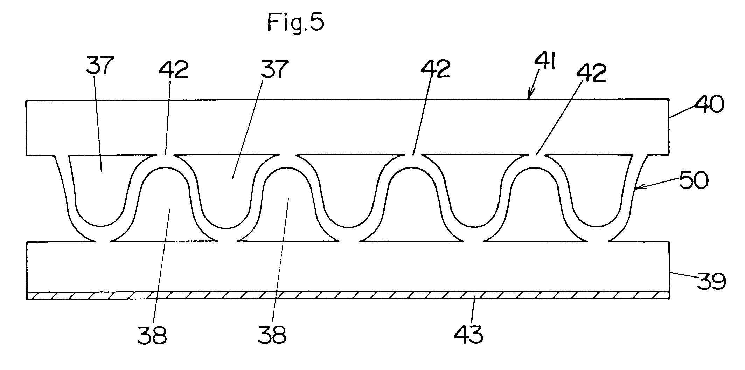

Fig. 5 illustrates a flat compact fluorescent lamp in accordance with a fourth embodiment of the present invention. The lamp comprises an integrally molded glass envelope **41** composed of a channeled member **50** formed on its upper and lower sides respectively with upper and lower channels **37** and **38**, either in the form of a serpentine in the case of rectangular or square geometry, or spiral in the case of circular geometry. The channeled member **50** is fused to individual planar members **40** and **39** on opposite sides thereof, in the like manner as discussed with reference to the first embodiment. Two independent discharges can be established in the channels **37** and **38** by appropriately attaching the like electrodes and driving them. For example, a pair of the like electrode assemblies as utilized in the second embodiment are inserted through tubes (not shown) formed to extend through the walls of the channeled member **50** into each of the channels. The inside surfaces of the channel walls of **37** and **38** are coated with phosphor (not shown) and the external surface of the one planar member **39** is coated with a reflective layer **43**. Also in this embodiment, the phosphor layer is formed in the manner as discussed hereinbefore prior to mounting the electrode assemblies and by the use of holes of the tubes for introducing and discharging the phosphor slurry or powder. By running a discharge through channels **37**, the regions marked **42** will be relatively dark. But if the discharges in the channels **38** are also made simultaneously, the high emission from behind the regions **42** will illuminate the otherwise dark areas **42**. Thus, a uniform illumination upward can be obtained in spite of the glass fusion regions **42**. Hence, this "double-sided" flat compact fluorescent lamp will be suitable for LCD backlighting. If each channel is coated with phosphors emitting different colors or color temperatures, a variable color lamp can be provided by adjusting the power in each channel.

Although not shown in the drawings, the planar member of any one of the above embodiments may be integrally formed with an additional channeled member with glass walls which define an additional convoluted channel. The glass walls of the additional channeled member on the planar member are fused to the existing channeled member in such a manner as to make the additional channel on the planar member in complementary with the channel of the channeled member for providing the two separate closed channels, as obtained in the embodiment of FIG. 5.

In any one of the above illustrated embodiments, an internal reflective layer may be formed on a selective portion of the lamp envelope beneath the phosphor layer. The internal reflective layer is also formed before providing the phosphor layer but after integrating the channeled member and the planar member into the envelope in the manner as discussed hereinbefore. Such internal reflective layer is preferred to be formed over a subtended angle of 10° to 300° about a center axis of the charge path formed in the channel.

The channeled member in any one of the above embodiments and modifications may be also formed by press-molding, blow-molding, in addition to the vacuum-assisted sag molding, or in combination thereof.

## Claims

1. A method of fabricating an integrally moulded flat compact fluorescent lamp, utilising a vitreous glass channelled member (11; 50) formed with walls (14a) defining a convoluted channel (14) as well as with tubes (12), and a complementary vitreous glass planar member (13; 39, 40), the method comprising the steps of:
fuse-sealing distal ends (15, 16; 42) of the walls of said channelled member to said planar member to provide a lamp envelope (10; 17; 24; 30; 41) with the internal convoluted channel (14; 33, 34; 37, 38) closed;
filling a phosphor material into said lamp envelope to provide a phosphor layer on the interior surface of said envelope; and
subsequently sealing at least two electrodes (19; 25, 26, 27; 31, 32, 35, 36) into said tubes of said envelope.

2. The method of claim 1, wherein said envelope is coated on a selected exterior portion with a reflective layer (23; 43).

3. The method of claim 1, further including the step of filling a reflective material into said envelope (10; 17; 24; 30; 41) prior to forming said phosphor layer, to provide a reflective layer beneath said phosphor coating at a selected portion of the envelope interior.

4. An integrally moulded flat compact fluorescent lamp, comprising:
a vitreous glass channelled member (11; 50) having walls (14a) forming a convoluted channel (14);
a vitreous glass planar member (13; 39, 40), wherein the glass forming the walls of said channelled member is fused directly with the glass of said planar member, the two members forming a lamp envelope (10; 17; 24; 30; 41) with a closed internal convoluted channel structure (14; 33, 34; 37, 38) disposed therein;
at least two spaced-apart electron-emissive electrodes (19; 25, 26, 27; 31, 32, 35, 36) each being sealed to said channelled member; and
a layer of a light-emissive phosphor disposed on the inside wall of said channelled member.

5. The lamp of claim 4, including a reflective layer directly adhering to the inside of said channelled member and covering the same at subtended angles between about 10° and 300° of the channelled member, wherein said light-emissive phosphor layer is disposed over said reflective layer.

6. The lamp of claim 4, wherein the phosphor density is smaller on the planar member than on the channelled member.

7. The lamp of claim 4 or 5, wherein said electrodes include a centrally-situated electron-emissive electrode and at least one electrode disposed on the periphery of the lamp.

8. The lamp of claim 4, further including a light reflective layer disposed on either the inside or the outside surfaces of said planar member.

9. The lamp of claim 4, wherein said channel structure includes a spiral channel, or parallel-running multi-spiral channels, or a serpentine channel, or parallel-running multi-serpentine channels.

10. The lamp of claim 4, wherein the external shape of the channelled member is square, rectangular or elliptical.

11. The lamp of claim 4, wherein another convoluted channelled member is disposed on said planar member in complementary registry with the channel structure on said channelled member.

12. The lamp of claim 4, wherein said channelled member (50) is integral with two planar members (39, 40) on both sides of the channelled member, the inner walls of the channelled member being coated with a light-emissive phosphor layer and the external surface of one of the planar members being coated with a reflective layer (43), the lamp further including three or four electron-emissive electrodes located to run a discharge independently in upper and lower channels formed between the planar members and the channel members.

13. The lamp of claim 4, having two separate channels (33, 34; 37, 38) and a phosphor layer disposed in each channel, the phosphor layers on the inner surfaces of said channels being of identical or different colour temperatures to provide a constant or variable colour temperature lamp.

14. The lamp of claim 4, wherein said channels (37, 38) are formed on upper and lower sides of said channelled member (50) to create separately operating independent lamps sharing common walls separating the lamps from each other.
